# EUROPEAN PATENT SPECIFICATION

(11) **EP 1 616 788 B1**
(45) Date of publication and mention of the grant of the patent: **15.12.2010**
(21) Application number: 05253647.1
(22) Date of filing: 14.06.2005
(51) Int. Cl.: B64D 45/00, B64D 31/00, F02C 9/00

(54) **Aircraft takeoff**
Flugzeugstart
Décollage d'aéronef

(30) Priority: 13.07.2004 GB 0415618
(43) Date of publication of application: 18.01.2006
(73) Proprietor: ROLLS-ROYCE PLC, London, SW1E 6AT (GB)
(72) Inventor: Brown, Stephen Geoffrey, Breadsall, Derby DE21 5LF (GB)
(74) Representative: Barcock, Ruth Anita

(56) References cited:
- US-A- 4 980 833
- US-A- 5 047 942
- US-A- 5 353 022
- US-A- 5 499 025

## Description

The present invention relates to aircraft takeoff and more particularly to methods of operating an aircraft whereby an indication is provided as to whether there is sufficient propulsion for efficient takeoff.

It will be appreciated in order to operate an aircraft efficiently, it is necessary to ensure particularly at takeoff that there is sufficient thrust to allow the aircraft to become airborne. The thrust may be provided by a gas turbine engine or an internal combustion engine driving a propeller. Previously, various approaches have been taken with regard to determining engine thrust as an indication as to whether there is sufficient propulsive power to enable efficient takeoff of the aircraft. US-A-5499025, which is considered the closest prior art, shows a method incorporating such an approch. Unfortunately, the necessary propulsive power provided through engine thrust must also be compared with the aircraft weight and other operational requirements. In such circumstances, a worst case scenario is normally determined for the necessary thrust for a particular aircraft configuration of weight for takeoff. Unfortunately, this worst case scenario must take account of such varying factors as air humidity which can alter the propulsion provided for thrust in an aircraft. Accordingly, with such an approach, an engine may be operated at too high a thrust ratio for the weight and may actually cause premature wear of the engine and also operational inefficiencies in terms of fuel consumption etc. Thus, there are significant operational and cost implications with regard to inefficient take off as well as potential problems with safety.

In addition to the underlying problem with respect to utilising engine thrust as the way to determine as to the viability for aircraft takeoff, it should also be appreciated that the various sensors used to determine thrust are themselves susceptible to mis-determination as a result of positional compromises, variability in aircraft weight and inaccuracy. It will also be appreciated that these sensors significantly add to cost.

For illustrative purposes, prior techniques for determining thrust have included determination of the engine pressure ratio between the hot and cold nozzles in an engine, that is to say the inlet and the outlet for that engine. Alternatively, flow pressure can be determined at various points within the engine or the hot nozzle pressure compared with the free flow pressure about the engine. Finally, with regard to turbine engines, the rotational speed of the fans of that engine can be utilised in order to determine thrust and therefore achievement of the necessary propulsive power for aircraft takeoff. All of these approaches require sensors which may be susceptible to failure, icing and variable performance.

In accordance with the present invention there is provided a method of operating an aircraft including an engine comprising determining a minimum takeoff acceleration for the aircraft and sensing acceleration of the aircraft by appropriate sensing means and the engine thrust of the aircraft is controlled by an engine control system to match the engine thrust with the acceleration of the aircraft sensed by the sensing means to achieve the determined minimum takeoff acceleration.

Possibly, the sensor means are associated with thrust determination means whereby a comparison therebetween is utilised in order to determine whether the indication is provided. Such thrust determination means may include determination of rotational speed or torque of a shaft driven by the engine.

Embodiments to the present invention will now be described by way of example.

The present invention utilises aircraft acceleration in order to determine whether that aircraft is capable of efficiently taking off. Use of aircraft acceleration ensures that there is a direct relevance to the aircraft's ability to efficiently takeoff within a required runway length. Furthermore, there is an implicit incorporation of the actual aircraft weight in the direct measurement of aircraft acceleration which is fully accounted for rather than projected for such determinance as thrust setting for the engines of the aircraft. Similarly, other operational uncertainties are catered for automatically. These uncertainties may relate to the relationship between thrust setting parameters through control levers to the actual thrust provided, brake binding and variations in air humidity and temperature. Additionally utilisation of aircraft acceleration will provide improved safety with regard to the aircraft in that the aircraft must achieve the required minimum acceleration or takeoff will be aborted.

In view of the above uncertainties associated with indirect measurement of engine thrust to determine whether takeoff is appropriate can be avoided. Means of determining aircraft acceleration do not require use of sensors which are susceptible to icing and which require specific calibration for particular conditions. Aircraft acceleration is a direct measure which is achieved through utilisation of engine thrust but is implicitly indicative of actual aircraft capability with its actual payload rather than exemplary payloads for thrust settings. It will be appreciated previously, an aircraft was provided with a maximum payload and therefore by implication, maximum takeoff weight in view of the available thrust which can be achieved by the engines. In such circumstances, there is an expected capability from the engine of the aircraft and therefore, in order to meet that expectation, a worst case scenario in terms of environmental factors (humidity, temperature, air pressure) and payload is made whereby there can be confidence in the ability of the aircraft to takeoff provided the particular thrust criteria is achieved. Similarly, these parameters are utilised in order to determine whether a runway was long enough to enable the aircraft to take off. With regard to the present invention where aircraft acceleration is utilised in order to determine the capability of the aircraft to takeoff, it will be understood that if the appropriate minimum acceleration is not achieved due to overloading, environmental factors or too short a runway, then the takeoff will be inherently aborted. Clearly, an aircraft manufacturer will normally still specify speedy acceptable operational conditions in terms of engine thrust, maximum payload, environmental conditions and necessary runway lengths for particular operational parameters, but this manufacturer may also be able to provide margins of error cross related to these parameters which take account of potential variations in environmental conditions such as humidity, temperature and air pressure such that the aircraft may takeoff where there are favourable conditions which exceed previous set maximum payloads, minimum runway lengths and minimum thrust levels. In such circumstances where less thrust is required, it will be appreciated that engine life may be extended due to reduced wear upon that engine. Similarly, reduced engine thrust will generally create a reduced engine noise which may have significant environmental benefits. Finally, reduced takeoff requirements where there are favourable conditions rather than necessitating minimums determined by a worst case scenario determination will potentially allow smaller, lighter, cheaper and more fuel efficient engine designs to be utilised for a particular aircraft. In any event, if less thrust is required, generally there will be less fuel used by that aircraft in taking off.

Accelerometer devices are well known. In general, these acceleration devices utilises displacement arrangements for momentum determination and therefore provide an indication of the current acceleration of a body secured to the sensor. The present invention will utilise such known accelerometer technology in order to determine the particular acceleration of the aircraft. Thus, in accordance with the present invention, a minimum takeoff acceleration of the aircraft will be determined by the aircraft manufacturer. This minimum takeoff acceleration may incorporate a margin for error but will typically be determined both theoretically through a consideration of the aerodynamics of the aircraft as well as empirically through test flights in various environmental conditions and with differing payloads. With such minimum takeoff acceleration determined associated accelerometers within the aircraft will be polled in order to determine actual aircraft acceleration and if that actual aircraft acceleration exceeds the minimum takeoff acceleration for the aircraft then an appropriate indication may be provided to a pilot of the aircraft. This indication may be an audible buzzer or bell and/or indicator light. However, normally a closed loop control regime will be used in which a control signal from the acceleration sensor is fed to the engine control system so that engine thrust is matched to aircraft acceleration.

As described above, normally a statistically acceptable number of accelerometers will be secured about the aircraft whereby an accurate determination of actual aircraft acceleration can be achieved. These accelerometers will be located and distributed in accordance with design criteria for consistent acceleration determination.

The present invention may be operated either as an independent system for determination of takeoff capability. In such circumstances, the accelerometers will provide signals indicative of actual aircraft acceleration. These signals will be fed to a central polling processor in order to provide a statistically averaged actual aircraft acceleration value and then a controller device utilising in order to compare that actual aircraft acceleration with the predetermined minimum takeoff acceleration necessary for the aircraft to efficiently takeoff. If the actual aircraft acceleration exceeds the determined takeoff acceleration then appropriate signals are provided to the engine control system and, if necessary, the pilot to allow necessary takeoff procedures in terms of payload and flap positions. Alternatively, on automatic piloting systems, the indication as to the aircraft acquiring the minimum takeoff acceleration will be utilised by that automatic pilot in order to initiate the necessary takeoff alterations upon the aircraft. In such circumstances, the present invention would be purely dependent upon the accelerometers and associated polling and comparison elements in order to provide the indication as ability of the aircraft to efficiently takeoff.

With respect to aircraft operations, it will be appreciated that safety is of paramount importance. In such circumstances, subject to other factors such as increased weight, space availability and processing capabilities, it is desirable to introduce multiple safety systems. In such circumstances, systems utilising determination of minimum takeoff acceleration in accordance with the present invention, may be associated with existing takeoff control systems utilising thrust and other factors. In such circumstances, each respective system will have limited authority with respect to providing an indication as to whether takeoff of the aircraft can be successfully and efficiently achieved. That is to say both systems must confirm safety of such takeoff. As indicated above, a number of techniques can be utilised in order to determine engine thrust. These techniques include engine pressure ratio determination and turbine fan speed. These systems may be associated as parallel independent takeoff determining authorisation systems or arranged for serial operations.

As independent systems clearly if one or other of the systems, that is to say aircraft acceleration in accordance with the present invention or thrust in accordance with previous techniques indicate that takeoff is not possible then a signal to abort takeoff will be provided to the pilot and other control systems.

With regard to service control, a traditional thrust determination as to takeoff capability in terms of sensors for engine pressure ratio and/or turbine fan speed will be utilised whilst actual aircraft acceleration will be used in order to refine within a predetermined range the desired target thrust value for safe takeoff of the aircraft.

For example, if fan speed is utilised, then it is known that there is a relationship between fan speed and thrust which is affected by humidity such that it is possible for there to be up to a 4% variation in thrust provided dependent upon humidity. Humidity may vary on a daily basis in such circumstances, if predicting the necessary thrust for takeoff in terms of fan speed, it is normally necessary to take account of this variation in available thrust due to humidity between a dry day and a humid day. In accordance with the present invention, the actual aircraft acceleration in terms of a limited authority will be utilised to adjust the target thrust for takeoff determined through fan speed whereby that thrust determination will be compared to a more accurate thrust valuation determined through fan speed than the worst case scenario typically proves susceptible for such arrangements due to variations in actual thrust.

With the above arrangement, it will be appreciated that control of engines will be set to a particular thrust setting parameter determined by fan speed and/or engine pressure ratio to achieve the expected predetermined minimum takeoff acceleration. Once a predetermined aircraft speed has been achieved, then if the necessary minimum takeoff acceleration has been achieved and the engines are operating within accepted operational parameters, then the aircraft will takeoff otherwise, takeoff will be aborted. In such circumstances, it will now be understood that there is an auto calibration of the engine thrust required for aircraft weight and this relationship can be set or calibrated for future use in this particular aircraft setup. In short, the initial expected thrust for that aircraft to achieve a desired takeoff acceleration may be adjusted from that original setting to the actual necessary thrust allowance to achieve minimum takeoff acceleration. Any difference between the expected originally set thrust and that necessary to achieve takeoff acceleration will be logged. This difference may then be utilised for subsequent aircraft operations and transmitted to engine manufacturers/aircraft manufacturers for future evaluation.

It will also be understood that engine thrust performance in comparison with acceleration may be determined in flight. In such circumstances, determination of aircraft speed, acceleration and engine thrust settings will all be cross related in order to determine the response of the aircraft dependent upon conditions. However, it will be also understood that cross winds and other factors may affect aircraft performance in respect of engine thrust and therefore, proper analysis will be required.

Rather than provide equality with respect to various aircraft takeoff control systems, it will be understood that there may be a weighting in the reliability of such systems and therefore, with respect to polling these systems, one system, which may be the present aircraft acceleration parameter may be provided with greater authority than other systems based upon engine thrust.

## Claims

1. A method of operating an aircraft including an engine comprising determining a minimum takeoff acceleration for the aircraft whereby the acceleration of the aircraft is sensed by appropriate sensing means and the engine thrust of the aircraft is controlled by an engine control system to match the engine thrust with the acceleration of the aircraft sensed by the sensing means to achieve the determined minimum takeoff acceleration.

2. A method as claimed in claim 1, **characterised in that** the sensor means are associated with thrust determination means whereby a comparison therebetween is utilised in order to determine whether an indication is provided.

3. A method as claimed in claim 2, **characterised in that** such thrust determination means include determination of rotational speed or torque of a shaft driven by the engine.

## Patentansprüche

1. Verfahren zum Betrieb eines mit einem Triebwerk ausgerüsteten Flugzeuges mit den folgenden Schritten: es wird eine minimale Startbeschleunigung für das Flugzeug ermittelt; es wird die Beschleunigung des Flugzeuges durch geeignete Sensoren festgestellt; es wird der Triebwerksschub des Flugzeuges durch ein Triebwerkssteuersystem derart eingestellt, dass der Triebwerksschub an die durch die Sensoren festgestellte Beschleunigung des Flugzeuges angepasst wird, um die ermittelte minimale Startbeschleunigung zu erreichen.

2. Verfahren nach Anspruch 1, **dadurch gekennzeichnet, dass** die Sensoren mit einer Einrichtung zur Schubbestimmung verbunden sind, womit ein Vergleich zwischen diesen benutzt wird, um festzustellen, ob eine Anzeige vorliegt.

3. Verfahren nach Anspruch 2, **dadurch gekennzeichnet, dass** die Einrichtung zur Schubbestimmung die Drehzahl oder das Drehmoment einer Welle misst, die durch das Triebwerk angetrieben wird.

## Revendications

1. Procédé pour faire fonctionner un avion comprenant un moteur, consistant à déterminer une accélération minimum au décollage pour l'avion, dans lequel l'accélération de l'avion est détectée par des moyens de détection appropriés et la poussée du moteur de l'avion est commandée par un système de commande de moteur pour faire correspondre à la poussée du moteur avec l'accélération de l'avion détectée par les moyens de détection pour obtenir l'accélération minimum au décollage déterminée.

2. Procédé selon la revendication 1, **caractérisé en ce que** les moyens de détection sont associés à des moyens de détermination de poussée, dans lequel une comparaison entre eux est utilisée afin de déterminer si une indication est fournie.

3. Procédé selon la revendication 2, **caractérisé en ce que** ces moyens de détermination de poussée comprennent la détermination d'une vitesse ou d'un couple de rotation d'un arbre entraîné par le moteur.
